# EUROPEAN PATENT APPLICATION

(11) **EP 1 430 803 A2**
(43) Date of publication of application: **23.06.2004**
(21) Application number: 03256872.7
(22) Date of filing: 30.10.2003
(51) Int. Cl.: A43B 13/00, A43B 3/26, A43B 5/02, A43B 23/16, B29D 31/518

(54) **Outsole assembly for a shoe**

(30) Priority: 19.12.2002 JP 2002367463
(71) Applicant: Mizuno Corporation, Osaka-shi, Osaka 541-8538 (JP)
(72) Inventor: Oorei, Takeshi, c/o Mizuno Corporation, Osaka-shi, Osaka 559-8510 (JP); Yasui, Toshiyasu, c/o Mizuno Corporation, Osaka-shi, Osaka 559-8510 (JP)
(74) Representative: Edwards, David Harvey Lloyd

(57) **Abstract**

An outsole assembly (2) includes an outsole forefoot portion (20) disposed at a forefoot region (F) of a shoe (1), and an outsole rear-foot portion (21) that are disposed at a rear-foot region (R) of the shoe (1) extending from a heel region (H) to a plantar arch region or a mid-foot region (M). A front end (21a) of the outsole rear-foot portion (21) overlaps a rear end (20a) of the outsole forefoot portion (20). A heel portion of the outsole rear-foot portion (21) includes a heel counter (22). The entire length of the outsole assembly (2) varies by changing the extent of an overlap between the outsole forefoot portion (20) and the outsole rear-foot portion (21), which enables the outsole assembly (2) to cope with different foot lengths.

## Description

### TECHNICAL FIELD OF THE INVENTION

The present invention relates to an outsole structure of a shoe.

### BACKGROUND OF THE INVENTION

An outsole of a shoe generally extends from a heel portion to a toe portion and the shoe is structured by fixedly attaching an upper to the outsole.

In a prior art shoe, an outsole was prepared for each foot length of shoe wearers. Therefore, the same kind of outsole was applied to only one size of a shoe.

On the other hand, in order to advance stability and fittability of a heel portion of a shoe, a heel counter is typically provided at the heel portion of a shoe. Also, as shown in Japanese Patent Application Laying-open Publication No. 2001-46107, aheel counter is integrated with an outsole.

In such a shoe, a forming mould becomes costly. Therefore, when a demand for a design change of studs has occurred and the entire lower mould should be changed, the mould becomes considerably costly.

The present invention has been made in view of these circumstances and its object is to provide an outsole assembly for a shoe that can cope with or can be applied to a plurality of foot lengths. Another object of the present invention is to provide a shoe having such an outsole assembly. A further object of the present invention is to provide a forming mould that can restrain an increase in cost relating to a design change of an outsole structure.

### SUMMARY OF THE INVENTION

The outsole structure for a shoe according to the present invention includes an outsole forefoot portion and an outsole rear-foot portion. The outsole forefoot portion is disposed at a forefoot region of a shoe. The outsole rear-foot portion is disposed at a rear-foot region of the shoe extending from a heel portion to a plantar arch portion. A front end of the rear-foot portion overlaps a rear end of the outsole forefoot portion. A heel portion of the rear-foot portion includes a heel counter upraised around the heel portion of the shoe. The entire length of the outsole assembly varies by changing the extent of an overlap between the outsole forefoot portion and the outsole rear-foot portion.

According to the present invention, by changing the extent of the overlap between the front end of the rear-foot portion and the rear end of the outsole forefoot portion, the entire length of the outsole assembly can be varied, thereby accommodating the outsole assembly to various lengths of wearer's feet.

Moreover, since the outsole forefoot portion and the outsole rear-foot portion are formed of discrete members, even when a demand for changing an outsole forefoot portion or an outsole rear-foot portion has occurred due to a change of the number or shape of the studs, it is not necessary to exchange the entire outsole. A change of either an outsole forefoot portion or an outsole rear-foot portion is sufficient, thereby decreasing an increase in cost relating to a design change of an outsole structure.

Furthermore, because the heel counter is provided integrally with the outsole rear-foot portion, fittability and stability relative to a heel portion of a foot is improved.

An upper end portion of the heel counter may have a hardness lower than a hardness of the other portions of the heel counter.

In this case, since the upper end of the heel counter is more flexible than the other portions of the heel counter, the outsole structure can be applied to different foot sizes of wearers and can soften the contact with a foot, thereby preventing a shoe sore.

An upper end portion of the heel counter may be fixedly attached to a front side material of an upper of the shoe.

A lower end portion of the front side material of an upper of the shoe may be disposed under and fixedly attached to the upper end portion of the heel counter.

In this case, since the front side material of the upper does not extend to the bottom surface of the heel counter, the weight of the upper is reduced and thus, the weight of the entire shoe can be decreased. Also, in this case, the upper can be easily conformed to the three-dimensional configuration of the heel portion.

A forefoot portion of the upper of the shoe may be sewn into a bag-form. Such a sewing in a bag-form is suitable not only for loose fit of a forefoot portion of the shoe but also for improvement in bendability of the entire forefoot portion of the shoe and achievement of barefoot feeling.

A bottom end portion of a forefoot portion of the upper of the shoe may extend to and be fixedly attached to a bottom side of a midsole that is disposed on the outsole forefoot portion. Such an attachment is suitable not only for tight fit of a forefoot portion of the shoe but also for restraint of bendability of the entire forefoot portion of the shoe and conformity of the upper to the shape of a last of the shoe.

A backside material of the upper of the shoe may be integrated along the length of the shoe. In this case, since there are no stitches on the backside material, a foot contact feeling is improved.

A backside material of the upper of the shoe may be formed of at least two parts separated at a medium portion along the length of the shoe. Also, a backside material of the upper of the shoe may be separated between a rear-foot piece corresponding to the rear-foot region of the shoe and a forefoot piece corresponding to the forefoot region of the shoe.

In either case, it allows for easy pattern-making of the backside material of the upper, easy straightening of the pattern of the backside material, and easy conforming of the backside material to the curved shape of a last of the shoe.

The forefoot piece of the backside material may be a bag-formed member having a bottom and the rear-foot piece of the backside material may be amember having an opening on a bottom side. In the alternative, the forefoot piece of the backside material may be a member having an opening on a bottom side and the rear-foot piece of the backside material may be a bag-formed member having a bottom.

In these cases, because either the forefoot portion or the rear-foot portion of the backside material of the upper is not formed in a bag-shape, straightening of the pattern of the backside material becomes easy, the weight of the entire backside material of the upper is decreased, and thus, the weight of the entire shoe is reduced.

A bottom surface portion of the backside material may be formed of a one-piece member extending along the length of the shoe. In this case, foot contact feeling is improved.

Each bottom surface portion of the forefoot and rear-foot piece of the backside material may be formed of a discrete member and fixedly attached to each other. In this case, it becomes easy to straighten a forefoot and rear-foot portion of the backside material at edges of a last, and it also becomes easy to differentiate rigidity of each portion of the backside material in accordance with the features of sports.

An outer circumferential edge of a bottom portion of the backside material may be fixedly attached to a bottom-side outer circumferential edge of a side portion of the backside material via bonding, sewing or the like.

In this case, it becomes easy to differentiate rigidity of the bottom portion of the backside material. Since there are no stitches on a foot contact region of the backside material, foot contact feeling is improved. Also, since the bottom portion of the backside material is formed of a discrete member from the side portion of the backside member, for example, a material with a good air permeability can be used at a side portion and a material with a good wear resistance and cushioning properties can be used at a bottom portion. In this case, a bottom portion of the backside material functions as a board.

Both of the forefoot piece and the rear-foot piece of the backside material may be a member having an opening on a bottom side.

A reinforcement plate extending along the length of the shoe may be provided at least at a portion of the outsole forefoot portion and the outsole rear-foot portion in the shoe.

In this case, since the rigidity of the outsole along the length of the shoe is increased, the outsole is achieved that can restrain bendability, advance stability, and relieve a thrust from the studs.

A reinforcement plate may be provided only at the outsole forefoot portion in the shoe. In this case, not only thrust from the studs is relieved with the stability of the shoe maintained at the forefoot portion of the shoe but also cushioning properties of the rear-foot portion of the shoe is secured and bare foot feeling is achieved.

A reinforcement plate may be provided only at a mid-foot region of the outsole rear-foot portion and the outsole forefoot portion in the shoe. In this case, not only thrust from the studs is relieved with the stability of the shoe maintained at the forefoot portion of the shoe but also injuries due to a pronation is prevented because of a shank-effect of a mid-foot portion,.

The reinforcement plate may be formed of a front portion and a rear portion that abut on each other at a line conforming to a flexion line of a foot. The rigidity of the front portion of the reinforcement plate is higher than the rigidity of the rear portion thereof.

Here, the flexion line of a foot is a line connecting each metatarsophalangeal joint of toes of a foot. In this case, thrust from the studs is relieved with the stability of the shoe maintained in front of the flexion line of a foot. Also, cushioning properties are secured at the rear of the flexion line and bare foot feeling is achieved.

In the alternative, the rigidity of the rear portion of the reinforcement plate may be higher than the rigidity of the fore portion thereof. In this case, thrust from the studs is relieved with the stability of the shoe maintained at the rear of the flexion line of a foot. Also, cushioning properties are secured in front of the flexion line and bare foot feeling is achieved.

A buffer device may be provided at a heel portion, a plantar arch portion, or a forefoot portion of the shoe. In this case, cushioning properties are improved without hindering stabilities of the heel portion, plantar-arch portion, and forefoot portion, thereby preventing injuries from occurring at the heel portion, plantar arch portion, or forefoot portion of a foot of a wearer.

Preferably, the buffer device is formed of a plurality of wavy, corrugated plates that extend along the length of the shoe in a band-shape and that are adjoined and connected to each other.

In this case, at the time of striking onto the ground, when an impact load is applied to the heel portion or the forefoot portion of the shoe, crests of a wavy corrugation of the wavy, corrugated plates are deformed downwardly and troughs of the wavy corrugation of the wavy, corrugated sheets are deformed upwardly, thereby absorbing an impact load. Moreover, in this case, each of the connections of the adjacent corrugated plates, which restrain deformation of each wavy corrugation, absorbs an impact load more efficiently in conjunction with the deformation of each wavy corrugation.

The phase of a wavy corrugation of each of the wavy, corrugated plates of the buffer device may be offset by half wavelength relative to the phase of a wavy corrugation of the adjacent wavy, corrugated plates.

The shoe may be a cleated shoe having a plurality of cleats on each bottom surface of the outsole forefoot portion and the outsole rear-foot portion. Further, the shoe may be a football shoe.

Another aspect of the present invention is directed to a forming mould for forming the outsole assembly. The forming mould for the outsole rear-foot portion includes an upper mould adapted to form an inner surface of the heel counter, a first lower mould disposed opposite the upper mould and adapted to form an outer surface of the heel counter, and a second lower mould disposed opposite the upper mould, inserted into the first lower mould, and adapted to form a bottom surface of the heel counter.

In this case, when a necessity for a design change such as a change of a stud arrangement on the outsole arises, only a change of the second lower mould is required and a change of the upper mould and the first lower mould is not required. As a result, increase in cost due to a design change of the outsole structure can be restrained.

### BRIEF DESCRIPTION OF THE DRAWINGS

For a more complete understanding of the invention, reference should be made to the embodiments illustrated in greater detail in the accompanying drawings and described below by way of examples of the invention. In the drawings, which are not to scale:
FIG. 1 is a medial side view of a shoe employing an outsole structure according to an embodiment of the present invention;
FIG. 2 is a bottom view of the shoe in FIG. 1 ;
FIG. 3 is a bottom schematic view of the outsole structure in FIG. 1, showing a change in length of the structure when the extent of an overlap of an outsole forefoot portion relative to an outsole rear-foot portion is changed;
FIG. 4 is a sectional view of a forefoot portion of the shoe in FIG.1;
FIG. 5 shows a variant of FIG. 4;
FIG. 6 is a bottom side perspective view of a backside material of an upper of the shoe in FIG. 1;
FIG. 7 shows a first variant of FIG. 6;
FIG. 8 shows a second variant of FIG. 6;
FIG. 9 shows a third variant of FIG. 6;
FIG. 10 shows a fourth variant of FIG. 6;
FIG. 11 is a partial perspective view of a buffer assembly applied to the shoe in FIG. 1; and
FIG. 12 is a partial sectional view illustrating a mould to form the outsole structure in FIG. 1.

### DETAILED DESCRIPTION OF THE PREFERRED EMBODIMENTS

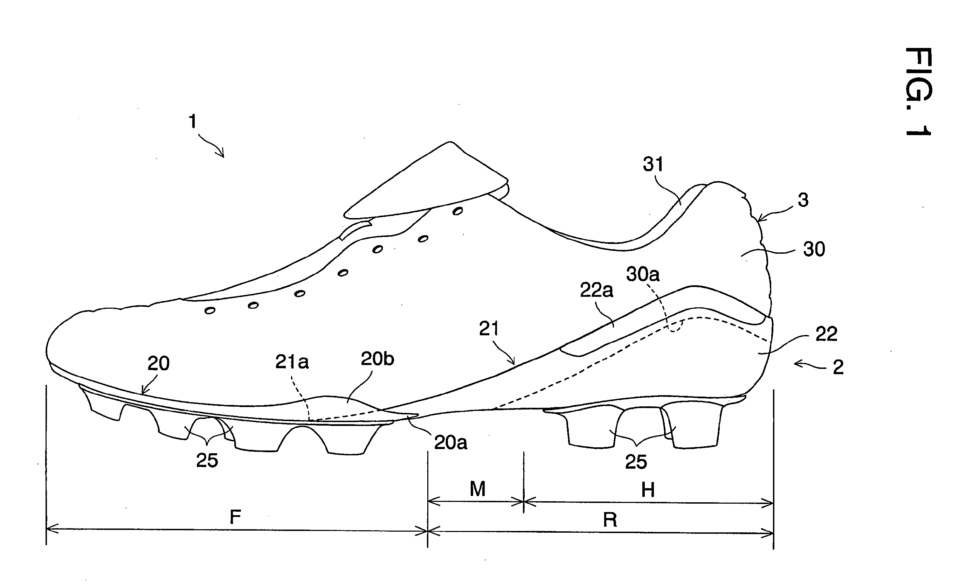

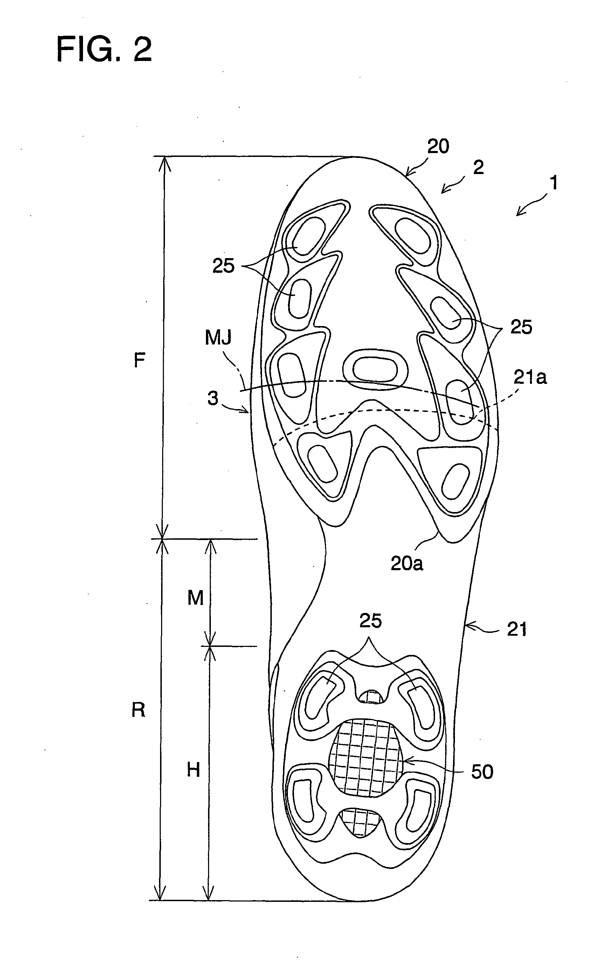

Turning now to the drawings, FIGS. 1 and 2 illustrate a shoe generally at 1 having an outsole assembly according to an embodiment of the present invention.

As shown in FIGS. 1 and 2, a shoe 1 includes an outsole assembly 2 and an upper 3 attached thereto.

The outsole assembly 2 is formed of an outsole forefoot portion 20 disposed at a forefoot region F of the shoe 1 and an outsole rear-foot portion 21 extending from a heel region H through a plantar arch region M to a portion of the forefoot region F of the shoe 1.

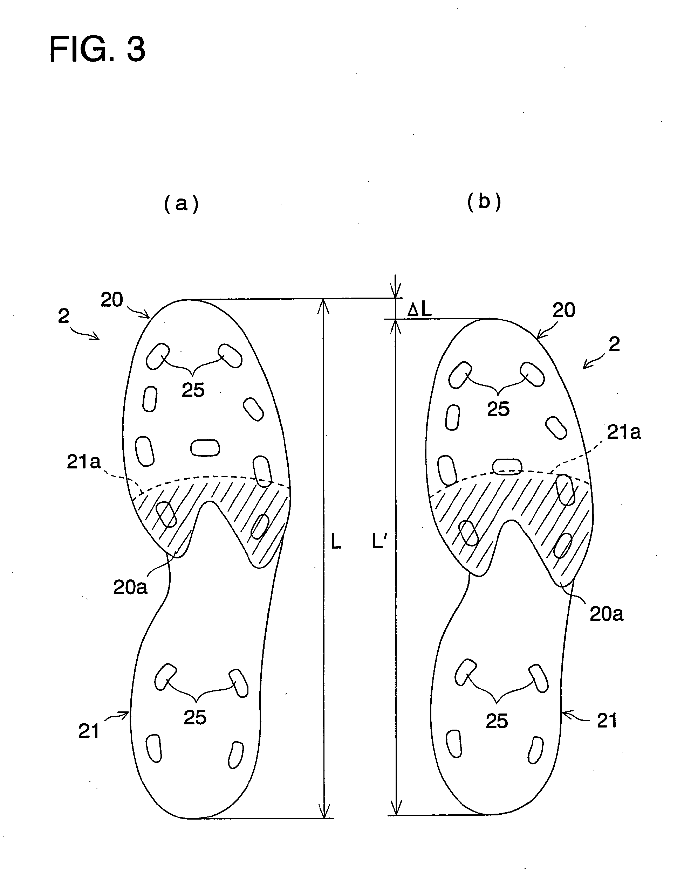

A front end 21a of the outsole rear-foot portion 21 overlaps a rear end 20a of the outsole forefoot portion 20. The extent of an overlap of the outsole forefoot and rear-foot portions 20, 21 can be varied as shown in a hatched region of an example in FIG. 3. FIG. 3(a) illustrates a state of a foot size or foot length L and FIG. 3(b) illustrates a state of a foot size L', which is ΔL shorter than the foot size L. In such a manner, the outsole assembly can be applied to various foot sizes.

Turning back to FIG. 1, the outsole forefoot portion 20 has an upraised portion 20b formed at a medial side edge portion beside a rear end 20a. The upraised portion 20b has a curvature that varies considerably according to the foot size of a wearer. Therefore, when the extent of an overlap between the rear end 20a of the outsole forefoot portion 20 and the front end 21a of the outsole rear-foot portion 21 is changed, such an upraised portion 20b helps to connect each outsole portion 20, 21 smoothly. The upraised portion 20b also helps to improve aesthetic appearance by covering the side edges of the front end 21a of the outsole rear-foot portion 21.

A heel counter 22 is provided integrally with a heel portion of the outsole rear-foot portion 21 to encompass the heel region H of the shoe 1 to improve fittability and stability relative to a heel portion of a wearer's foot.

An upper end 22a of the heel counter 22 has a hardness lower than a hardness of the other portions of the heel counter 22. The upper end 22a of the heel counter 22 is thus more flexible than the other portions thereof, thereby softening a foot contact feeling relative to a wearer's foot and preventing a shoe sore.

In addition, a plurality of studs 25 are provided on a bottom surface of the outsole forefoot and rear-foot portion 20, 21. Here, the studs 25 are formed integrally with the outsole 20, 21, but each stud 25 may be provided detachably in an attachment hole formed on the bottom surface of the outsoles 20, 21.

The upper 3, shown in FIG. 1, is formed of a front side material 30 provided on the outside surface of the shoe 1 and a back side material 31 provided inside the shoe 1 and attached to the back surface of the front side material 30. A lower edge 30a of the heel portion of the front side material 30 is preferably disposed at a position corresponding to the upper edge 22a of the heel counter 22, that is, slightly under the upper end 22a, and fixedly attached to the upper edge 22a. In other words, the front side material 30 of the upper 3 does not extend to the bottom surface of the heel counter 22, thereby decreasing the weight of the upper 3, and thus, the weight of the entire shoe, and causing the upper 3 to be easily conformed to the shape of the heel portion.

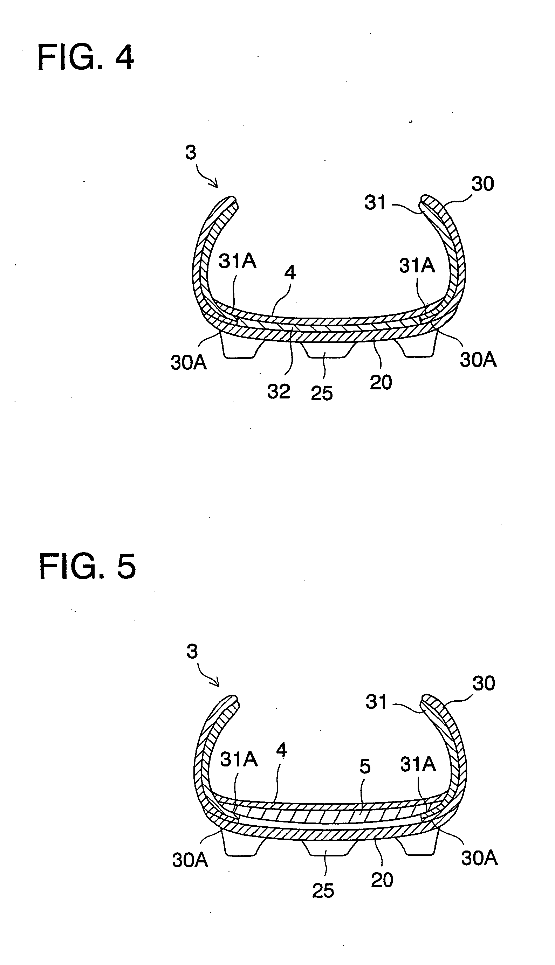

As shown in FIG. 4 depicting a section of the forefoot region F of the shoe 1, at a forefoot portion of the upper 3, each of the bottom side end surfaces 30A, 31A of the front and back sidematerials 30, 31 is disposed opposite a sheet material 32 disposed at a bottom portion, thereby forming the bottom portion of the upper in a bag-shape to allow for slip-lasting. Therefore, in this case, the sheet material 32 functions as a board. Additionally, in FIG. 4, an insole 4 is also provided inside the upper 3.

In this case, the forefoot region F of the shoe 1 can be made loose fit relative to a wearer's foot. Also, the entire forefoot portion of the shoe can be more flexible and barefoot feeling can be achieved.

The forefoot region F of the shoe 1 may have a structure such as shown in FIG. 5. In the forefoot portion of the upper 3, the bottom side end surfaces 30A, 31A of the front and backside materials 30, 31 extend to the bottom side of a reinforcement plate 5 and bonded to the reinforcement plate 5. Such a structure allows for board-lasting. In this case, stability of the shoe can be maintained and thrust of the studs can be relieved at the forefoot region F of the shoe 1. Also, cushioning properties can be improved and barefoot feeling can be achieved at the rear-foot region R of the shoe 1.

In this case, the forefoot region F of the shoe 1 can be made tight fit relative to a wearer's foot and flexibility of the forefoot portion of the shoe can be restrained in some degree. Also, it allows for easy conforming of the upper to the curved shape of a last of the shoe.

Alternatively, the reinforcement member 5 may be disposed at the rear-foot portion of the upper 3. In this case, since rigidity of the outsole becomes relatively high along the length of the shoe, the outsole is achieved that can restrain bendability of the shoe, improve stability, and relieve thrust from the studs.

The reinforcement plate 5 may be formed of a front portion and a rear portion that abut on each other at a line conforming to a flexion line MJ of a foot (see FIG. 2) , and the rigidity of the front portion of the reinforcement plate 5 may be higher than the rigidity of the rear portion thereof. Here, the flexion line MJ of a foot is a line connecting each metatarsophalangeal joint of toes of a wearer's foot. In this case, thrust from the studs is relieved with the stability of the shoe maintained in front of the flexion line MJ of a foot. Also, cushioning properties are advanced and bare foot feeling is achieved at the rear of the flexion line MJ.

In the alternative, the rigidity of the rear portion of the reinforcement plate 5 may be higher than the rigidity of the fore portion thereof. In this case, thrust from the studs is relieved with the stability of the shoe maintained at the rear of the flexion line MJ of a foot. Also, cushioning properties are advanced and bare foot feeling is achieved in front of the flexion line MJ.

Further, the reinforcement plate 5 may be provided at a mid-foot portion of the outsole rear-foot portion 21 and the outsole forefoot portion 20 inside the shoe. In this case, a shank effect of the mid-foot region M is achieved with the stability of the forefoot region F of the shoe 1 maintained and thrust from the studs relieved.

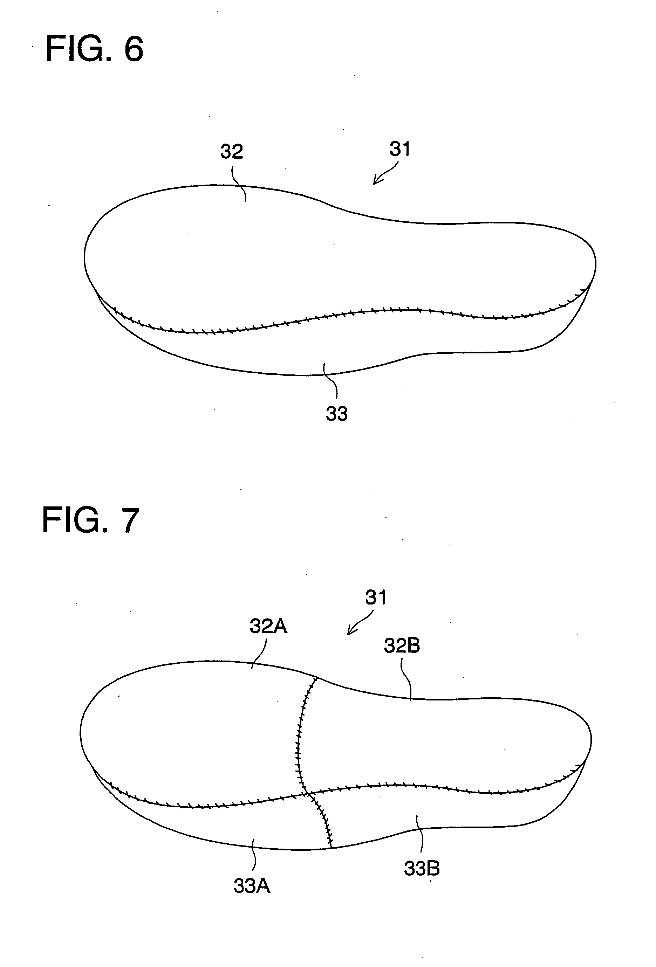

As shown in FIG. 6, the backside material 31 of the upper 3 extends from the heel region to the forefoot region of the shoe and it is formed with a bottom portion 32 corresponding to the bottom part of the outsole assembly 2 and a sidewall portion 33 surrounding the bottom portion 32. A lower end or bottom side end of the sidewall portion 33 is sewn to the perimeters of the bottom portion 32. In this case, since the bottomportion 32 of the backside material 31 is formed of a one-piece member extending along the length of the shoe and has no seams, foot contact feeling is improved. Additionally, the bottom portion 32 functions as a midsole.

The constitution of the backside material 31 of the upper 3 is not limited to that shown in FIG. 6. FIGS. 7-10 designate first to fourth variants of FIG. 6, respectively. In these figures, like reference numbers indicate identical or functionally similar elements.

In a first variant show in FIG. 7, the backside material 31 is formed of two discrete members divided at the intermediate portion along the length of the shoe. That is, the bottom potion of the backside material 31 is formed of a first and second bottom portion 32A, 32B, each of which functions as a midsole, and a sidewall portion is formed of a first and second sidewall portion 33A, 33B. The first bottom and sidewall portion 32A, 33A is provided at a region corresponding to the forefoot region F of the shoe and the second bottom and sidewall portion 32B, 33B is provided at a region corresponding to the rear-foot region R of the shoe. The first bottom portion 32A is sewn to and integrated with the second bottom portion 32B. Similarly, the first sidewall portion 33A is sewn to and integrated with the second sidewall portion 33B.

In this case, it becomes easy to pattern-make the backside material 31 of the upper 3, straighten the patterns of the backside material 31, and conform the backside material 31 to the curved shape of a last. It also becomes easy to differentiate rigidity of the forefoot portion from that of the rear-foot portion of the backside material 31 by adopting members of different rigidities.

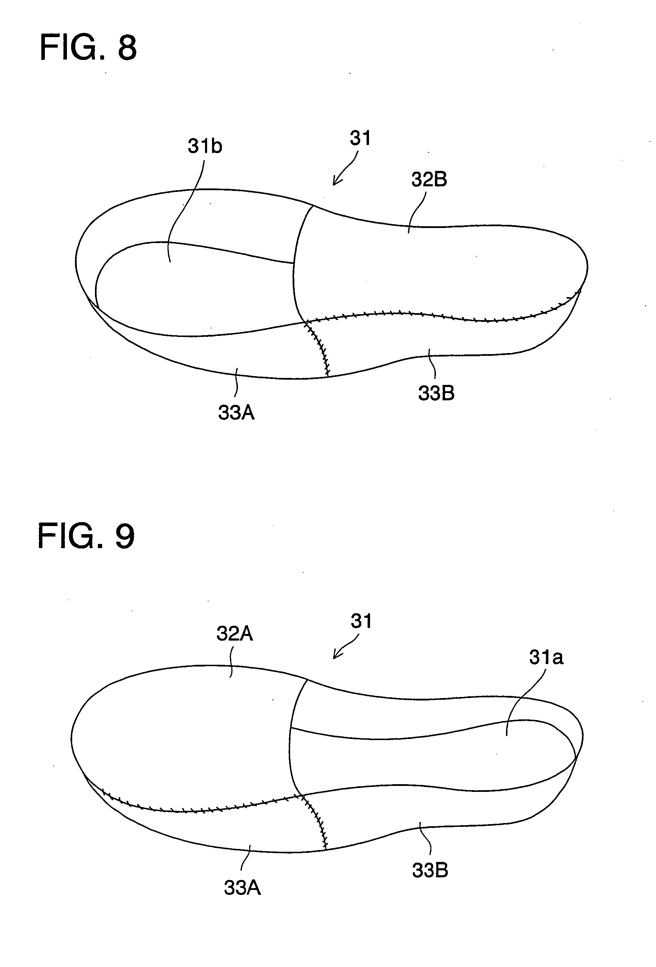

Then, in a second variant shown in FIG. 8, the backside material 31 has a bottom portion 32A as a midsole on a shoe forefoot side, but a shoe rear-foot side has no bottom portions and it is formed with an aperture 31a. Also, in a third variant shown in FIG. 9, unlike the example of FIG. 8, a shoe rear-foot portion has a bottom portion 32B, and a shoe forefoot portion has no bottom portions and it is formed with an opening 31b.

In these cases, since either of the forefoot portion or the rear-foot portion of the backside member 31 of the upper 3 has no bottom portions, it becomes easy not only to straighten patterns of the backside member 31 but also to decrease the weight of the entire backside material 31 of the upper 3 and thus, the entire weight of the shoe.

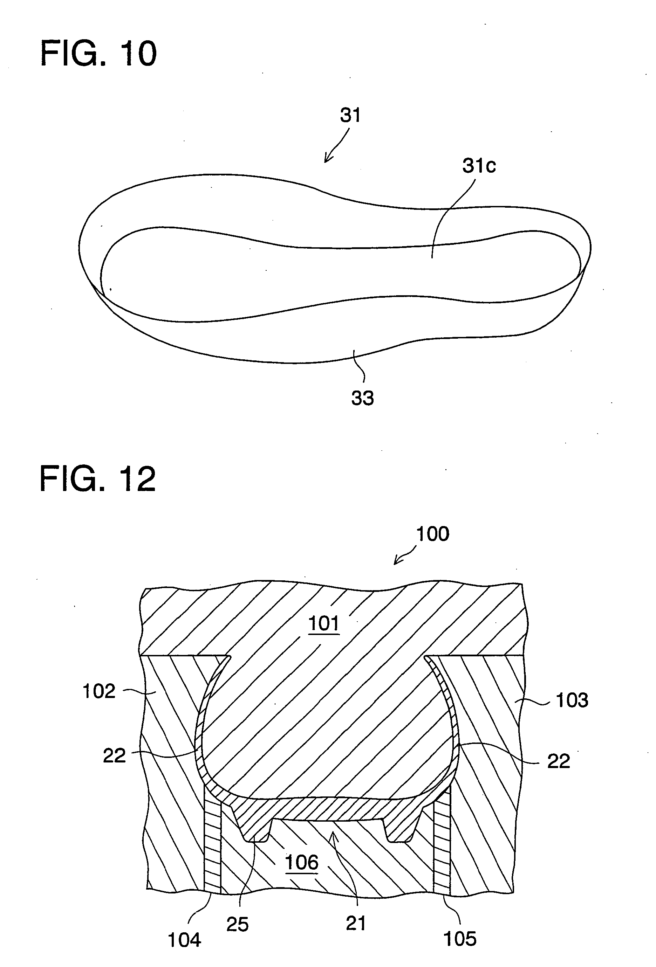

In a fourth variant shown in FIG. 10, the backside material 31 has no bottom portions at both the shoe forefoot and rear-foot portions and it is formed with an opening 31c extending along the length of the shoe. In this case, it becomes much easier not only to straighten patterns of the backside material 31 but also to decrease the weight of the entire backside material 31 of the upper 3 and thus, the entire weight of the shoe.

As shown in FIG. 2, a buffer device 50 is provided at a heel portion of the outsole assembly 2. In FIG. 2, since a part of the heel portion of the outsole rear-foot portion 21 is formed of transparent plastics, a part of the buffer device 50 is see-through from the bottom side of the outsole rear-foot portion 21.

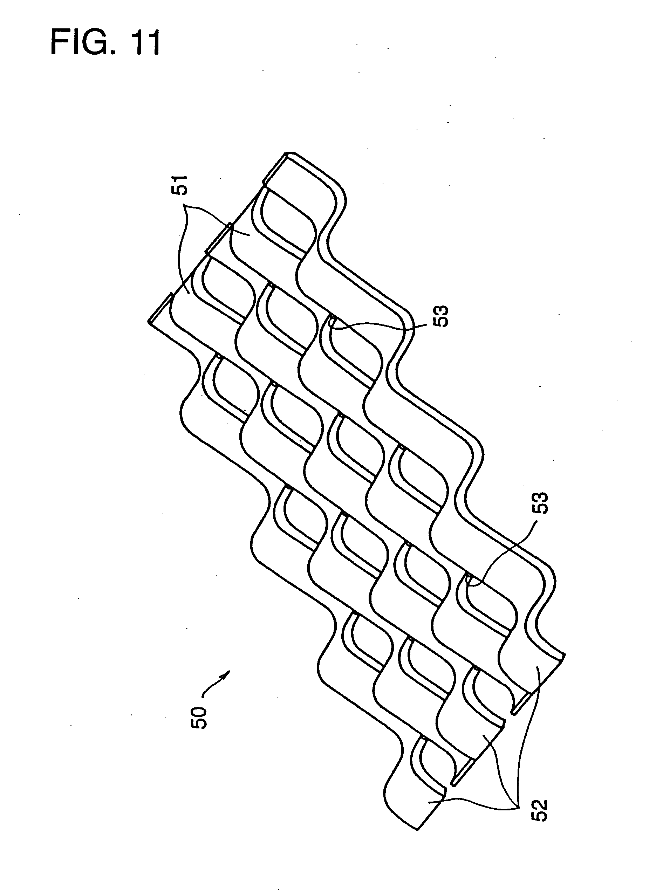

As shown in FIG. 11, the buffer device 50 is formed of a plurality of wavy, corrugated plates 51, 52 that extend along the length of the shoe in a band-shape, and are adjoined to each other. The phase of wavy corrugation of each of the wavy, corrugated plates 51, 52 of the buffer device 50 is offset by half wavelength relative to the phase of wavy corrugations of the adjacent wavy, corrugated plates 51, 52. Also, the wavy, corrugated plates 51, 52 are connected to each other via connections 53.

In this case, at the time of striking onto the ground during sports, when an impact load is applied to the heel region H of the shoe 1, crests of a wavy corrugation of the wavy, corrugated plates 51, 52 are deformed downwardly and troughs of the wavy corrugation of the wavy, corrugated sheets 51, 52 are deformed upwardly, thereby absorbing an impact load. Moreover, in this case, since each of the connections 53 of the adjacent corrugated plates 51, 52 restrains a deformation of each wavy corrugation, an impact load is absorbed more efficiently in conjunction with the deformation of each wavy corrugation. In addition, the buffer device 50 may be provided at the mid-foot region M or the forefoot region F of the shoe 1.

Next, a forming mould for forming the outsole assembly 2 will be explained hereinafter. FIG. 12 illustrates a forming mould 100 for the outsole rear-foot portion 21 of the outsole assembly 2. The forming mould 100 includes an upper mould 101 adapted to move upwardly and downwardly and to form an inner surface of the outsole rear-foot portion 21, a medial and lateral mould 102, 103 adapted to move toward and away from each other on the opposite sides of the upper mould 101 and to form a medial and lateral outside surface of the outsole rear-foot portion 21, respectively, a first, pair of lower moulds 104, 105 disposed under the upper mould 101, and a second, pair of lower moulds 106 interposed between the lower moulds 104 and 105 under the upper mould 101 to form the bottom portion of the outsole rear-foot portion 21.

In this case, when a necessity for a design change such as a change of the arrangement of studs on the heel portion of the outsole assembly 2 arises, only a change of the second lower mould 106 is required and a change of the upper mould 101 and the first lower moulds 104, 105 is not required. Thereby, increase in cost due to a design change of the outsole structure can be restrained.

## Claims

1. An outsole assembly (2) for a shoe (1) comprising:
an outsole forefoot portion (20) disposed at a forefoot region (F) of a shoe (1); and
an outsole rear-foot portion (21) that is disposed at a rear-foot region (R) extending from a heel portion (H) to a plantar arch portion (M) of the shoe (1), a front end (21a) of the outsole rear-foot portion (21) overlapping an rear end (20a) of the outsole forefoot portion (20), and a heel portion of the outsole rear-foot portion (21) including a heel counter (22) upraised around the heel region (H) of the shoe (1);
wherein the entire length of the outsole assembly (2) varies by changing the extent of an overlap between the outsole forefoot portion (20) and the outsole rear-foot portion (21).

2. The outsole assembly according to claim 1, wherein an upper end portion (22a) of the heel counter ( 22 ) has a hardness lower than a hardness of the other portions of the heel counter (22).

3. A shoe comprising the outsole assembly according to claim 1, wherein an upper end portion (22a) of the heel counter (22) is fixedly attached to a front side material (30) of an upper (3) of the shoe (1).

4. The shoe according to claim 3, wherein an upper end portion (22a) of the heel counter (22) has a hardness lower than a hardness of the other portions of the heel counter (22).

5. The shoe according to claim 3 or 4, wherein a lower end portion of the front side material (30) of the upper (3) of the shoe (1) is disposed under and fixedly attached to the upper end portion (22a) of the heel counter (22).

6. The shoe according to claim 3, wherein a forefoot portion of the upper (3) of the shoe (1) is sewn into a bag-form.

7. The shoe according to claim 3, wherein a bottom end portion (30A) of a forefoot portion of the upper (3) of the shoe (1) extends to and fixedly attached to a bottom side of a midsole that is disposed on the outsole forefoot portion (20).

8. The shoe according to claim 3, wherein a backside material (31) of the upper (3) of the shoe (1) is integrated along the length of the shoe (1).

9. The shoe according to claim 3, wherein a backside material (31) of the upper (3) of the shoe (1) is formed of at least two parts separated at an intermediate portion along the length of the shoe (1).

10. The shoe according to claim 9, wherein the backside material (31) of the upper (3) of the shoe (1) is separated between a rear-foot piece corresponding to the rear-foot region (R) of the shoe (1) and a forefoot piece corresponding to the forefoot region (F) of the shoe (1).

11. The shoe according to claim 10, wherein the forefoot piece of the backside material (31) is a bag-formed member having a bottom and the rear-foot piece of the backside material (31) is a member having an opening on a bottom side.

12. The shoe according to claim 10, wherein the forefoot piece of the backside material (31) is a member having an opening on a bottom side and the rear-foot piece of the backside material (31) is a bag-formed member having a bottom.

13. The shoe according to claim 10, wherein each of the forefoot piece and the rear-foot piece of the backside material (31) is a bag-formed member having a bottom.

14. The shoe according to claim 13, wherein a bottom surface portion of the backside material (31) is formed of a one-piece member extending along the length of the shoe (1).

15. The shoe according to claim 13, wherein each bottom surface portion of the forefoot and rear-foot piece of the backside material (31) is formed of a discrete member and fixedly attached to each other.

16. The shoe according to any one of claims 8 to 15, wherein an outer circumferential edge of a bottom portion of the backside material (31) is fixedly attached to a bottom-side outer circumferential edge of a side portion of the backside material (31).

17. The shoe according to claim 10, wherein each of the forefoot piece and the rear-foot piece of the backside material (31) is a member having an opening on a bottom side.

18. The shoe according to any one of claims 3 to 17, wherein a reinforcement plate (5) extending along the length of the shoe (1) is provided at least at a portion of the outsole forefoot portion (20) and the outsole rear-foot portion (21) in the shoe (1).

19. The shoe according to any one of claims 3 to 17, wherein a reinforcement plate (5) is provided at the outsole forefoot portion (20) in the shoe (1).

20. The shoe according to any one of claims 3 to 17, wherein a reinforcement plate (5) is provided at a mid-foot region of the outsole rear-foot portion (2 1 ) and the outsole forefoot portion (20) in the shoe (1).

21. The shoe according to any one of claims 18 to 20, wherein the reinforcement plate (5) is formed of a front portion and a rear portion that abut on each other at a line conforming to a flexion line (MJ) of a foot, the rigidity of the front portion of the reinforcement plate (5) being higher than the rigidity of the rear portion thereof.

22. The shoe according to any one of claims 18 to 20, wherein the reinforcement plate (5) is formed of a front portion and a rear portion that abut on each other at a line conforming to a flexion line (MJ) of a foot, the rigidity of the rear portion of the reinforcement plate (5) being higher than the rigidity of the fore portion thereof.

23. The shoe according to any one of claims 3 to 22, wherein a buffer device (50) is provided at a forefoot region (F), a plantar arch region (M), or a rear-foot region (R) of the shoe (1).

24. The shoe according to claim 23, wherein the buffer device (50) is formed of a plurality of wavy, corrugated plates (51, 52) that extend along the length of the shoe (1) in a band-shape, and that are adjoined and connected to each other.

25. The shoe according to claim 23, wherein the phase of a wavy corrugation of each of the wavy, corrugated plates (51, 52) of the buffer device (50) is offset by half wavelength relative to the phase of a wavy corrugation of the adjacent wavy, corrugated plates (51, 52).

26. The shoe according to any one of claims 3 to 25, wherein the shoe (1) is a cleated shoe having a plurality of cleats (25) on each bottom surface of the outsole forefoot portion (20) and the outsole rear-foot portion (21).

27. The shoe according to any one of claims 3 to 26, wherein the shoe (1) is a football shoe.

28. A forming mould (100) for forming the outsole assembly (2) of claim 1 or 2, the forming mould for the outsole rear-foot portion (21) comprising:
an upper mould (101) adapted to form an inner surface of the heel counter (22);
a first lowermould (104, 105) disposed opposite the upper mould (101) and adapted to form an outer surface of the heel counter (22); and
a second lower mould (106) disposed opposite the upper mould (101), inserted into the first lower mould (104, 105), and adapted to form a bottom surface of the heel counter (22).

29. A sole assembly (2) for a shoe (1) comprising: a forefoot portion (20) having a rear edge portion (20a); a rearfoot portion (21) having a front edge portion (21a); wherein the length of the assembly is variable by varying the extent of an overlap between the rear edge portion and the front edge portion, to enable the sole assembly to be fitted in a shoe of any one of a plurality of shoe sizes.
